# EUROPÄISCHE PATENTSCHRIFT

(11) **EP 0 729 854 B1**
(45) Veröffentlichungstag und Bekanntmachung des Hinweises auf die Patenterteilung: **19.05.1999**
(21) Anmeldenummer: 96890006.8
(22) Anmeldetag: 11.01.1996
(51) Int. Cl.: B60C 11/03, B60C 11/04, B60C 11/11, B60C 11/12

(54) **Fahrzeugreifen**
Vehicle tyre
Bandage pneumatique pour véhicule

(30) Priorität: 25.01.1995 AT 126/95
(43) Veröffentlichungstag der Anmeldung: 04.09.1996
(73) Patentinhaber: Semperit Reifen Aktiengesellschaft, A-2514 Traiskirchen (AT)
(72) Erfinder: Peschel, Wolfgang, Dipl.-Ing., A-1070 Wien (AT); Ostrovskis, Allan, S-33235 Gislaved (SE)
(74) Vertreter: Vinazzer, Edith, Dipl.-Ing.

(56) Entgegenhaltungen:
- EP-A- 0 609 195
- DE-A- 4 300 695

## Beschreibung

Die vorliegende Erfindung betrifft einen Fahrzeugreifen, insbesondere für den Einsatz unter winterlichen Fahrbedingungen, mit einem Laufstreifenprofil, welches durch in Umfangsrichtung verlaufende Nuten und durch Quernuten eine Gliederung in je eine Schulterblockreihe und je ein Paar von Mittelblockreihen aufweist, wobei die Blöcke dieser Blockreihen jeweils mit einer Vielzahl von untereinander parallel verlaufenden Lamellenfeineinschnitten versehen sind.

Fahrzeugluftreifen mit derartigen Laufstreifenprofilen sind in unterschiedlichen Ausführungsvarianten bekannt. Bei der Gestaltung von Laufstreifenprofilen für Winterreifen ist es wichtig, den sehr unterschiedlichen Anforderungen an solch einen Reifen gerecht zu werden, da Winterreifen sowohl auf trockenen Fahrbahnen als auch auf nassen Fahrbahnen und unter winterlichen Fahrbedingungen zufrieden stellen sollen. Im Vordergrund steht daher, verschiedenste Profileigenschaften aufeinander möglichst gut abzustimmen, so daß der Reifen beispielsweise im Naßgriff entspricht und ein gutes Führungs- und Traktionsverhalten sowie Bremsverhalten unter winterlichen Fahrbedingungen, beispielsweise auf Schnee und Eis, aufweist.

Die Erfindung hat sich nun die Aufgabe gestellt, einen Reifen der eingangs genannten Art hinsichtlich Naßgriff, Traktions- und Bremsverhalten auf Schnee sowie bezüglich seiner Seitenführungseigenschaften auf Schnee zu verbessern.

Gelöst wird die gestellte Aufgabe erfindungsgemäß dadurch, daß sowohl die Blöcke der näher zur Profilmitte liegenden Mittelblockreihe als auch die in Querrichtung jeweils benachbarten Blöcke der beiden Blockreihen jeweils durch eine Kombination aus einem breiten und einem schmalen Nutabschnitt voneinander getrennt sind, wobei die schmalen Nutabschnitte eine geringere Tiefe besitzen als die breiten Nutabschnitte.

Durch die erfindungsgemäße Ausgestaltung ist einerseits im Mittelbereich des Laufstreifens eine Blockstruktur gegeben, durch die somit eine Vielzahl von Griffkanten zur Verfügung gestellt wird, was für die Fahreigenschaften unter winterlichen Fahrbedingungen von Vorteil ist, andererseits wird durch die erfindungsgemäßen Kombinationen mit jeweils breiten und schmalen Nutabschnitten, wobei die schmäleren Nutabschnitte jeweils weniger tief ausgeführt sind als die breiten, eine gewisse Ankopplung der Blöcke untereinander erzielt, die sich insgesamt auf die Profilstabilität im Laufstreifenmittelbereich günstig auswirkt.

Dabei ist es von Vorteil, wenn die schmalen Nutabschnitte eine Breite von 1 bis 2 mm besitzen und eine Tiefe aufweisen, die zwischen 30 und 60 % der Dessintiefe, insbesondere ca. 50 % der Dessintiefe, beträgt.

Die die Blöcke in den beiden benachbarten Mittelblockreihen trennenden schmalen Nutabschnitte sind nach einem weiteren Merkmal der Erfindung gegenüber den breiten Nutabschnitten in Querrichtung geringfügig versetzt.

Es ist weiters günstig, wenn das Verhältnis der Länge des schmalen Nutabschnittes zur Länge des zugehörigen breiten Nutabschnittes zwischen 1 : 4 bis 1 : 1 beträgt.

Auf die Wintergriffeigenschaften und das Traktionsverhalten wirkt es sich ferner günstig aus, wenn in den Blöcken der Schulterblockreihen Feineinschnitte angeordnet sind, die gegenüber der Reifenumfangsrichtung unter einem Winkel von 70 bis 85° geneigt sind und in den Blöcken der Mittelblockreihen Feineinschnitte angeordnet sind, die unter einem Winkel von 80 bis 90° gegenüber der Reifenumfangsrichtung verlaufen, wobei die Winkeldifferenz zwischen 5 und 15°, insbesondere bis zu 10°, beträgt.

Gemäß einer bevorzugten Ausführungsform der Erfindung wird das erfindungsgemäß gestaltete Profil als laufrichtungsgebundenes Profil ausgeführt, wobei der Verlauf der Quernuten derart gewählt wird, daß ein gepfeiltes Profilmuster entsteht, wobei die Pfeilspitzen beim Abrollen des Reifens zuerst in die Kontaktfläche mit dem Untergrund treten und die Anordnung der schmalen und breiten Nutabschnitte zwischen den in Reifenquerrichtung benachbarten Mittelblockreihenpaaren derart erfolgt, daß die schmalen Nutabschnitte ebenfalls zuerst in die Kontaktfläche mit dem Untergrund eintreten. Es hat sich herausgestellt, daß diese Ausgestaltung beim Bremsen auf schneeigem Untergrund besonders vorteilhaft ist.

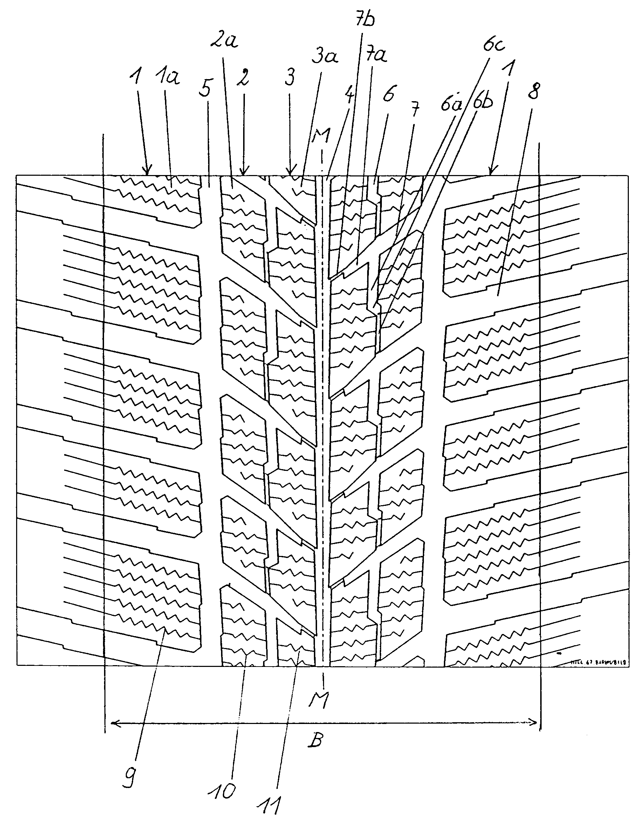

Weitere Merkmale, Vorteile und Einzelheiten der Erfindung werden nun anhand der Zeichnung, die ein Ausführungsbeispiel darstellt, näher beschrieben. Dabei ist in der einzigen Zeichnungsfigur eine Draufsicht auf eine Teilabwicklung eines gemäß der Erfindung gestalteten Laufstreifenprofiles dargestellt.

Das in der Zeichnungsfigur dargestellte Laufstreifenprofil ist insbesondere für PKW-Winterreifen vorgesehen. In der nun folgenden Beschreibung wird das Laufstreifenprofil über seine Breite B betrachtet, die der Breite in der Bodenaufstandsfläche des Reifens (gemäß E.T.R.T.O.-Standards) entspricht.

Bei dem dargestellten Laufstreifenprofil handelt es sich um ein laufrichtungsgebunden gestaltetes Profil. In jeder Laufstreifenhälfte sind einer Schulterblockreihe 1 und ein Paar von Mittelblockreihen 2, 3 angeordnet, entlang der Mittelumfangslinie M-M des Profiles ist eine Umfangsnut 4 angeordnet, die durch die Ausgestaltung der sie begrenzenden Blockkanten der Blöcke 3a leicht gezahnte Flanken besitzt. Die Breite der Umfangsnut 4 wird in einem Bereich von ca. 4 bis 6 mm gewählt. Jede Schulterblockreihe 1 ist von der ihr benachbarten Mittelblockreihe 2 durch je eine breite Umfangsnut 5 getrennt. Die Trennung jeden Paares von Mittelblockreihen 2, 3 erfolgt durch Nuten 6, auf deren Ausgestaltung weiter unten noch näher eingegangen wird.

Eine weitere Gliederung des Laufstreifenprofiles erfolgt durch Quernuten 7, 8, deren Gesamtverlauf so gewählt ist, daß sie zwischen den Blöcken 3a der Mittelblockreihen 3 beginnend zumindest im wesentlichen kontinuierlich bis zum Laufstreifenrand und über diesen hinaus verlaufen, wobei solcherart ein als "gepfeilt" bezeichnetes Laufstreifenprofil entsteht, das für viele laufrichtungsgebundene Profile typisch ist. Dabei schließen die Quernuten 7 mit der Mittelumfangslinie M-M einen Winkel von ca. 50 bis 70° ein, die Quernuten 8 einen Winkel von ca. 70 bis 85°.

Die Quernuten 7 enden zwischen den in Umfangsrichtung benachbarten Blöcken 3a der Mittelblockreihen 3 als sacknutartige Nutabschnitte 7a und werden bevorzugt zur Laufflächenmitte zu kontinuierlich schmäler. An die Nutabschnitte 7a schließen Nutabschnitte 7b an, die in Verlängerung der Nutabschnitte 7a verlaufend eine Verbindung zur mittleren Umfangnsnut 4 herstellen. Dabei sind die Nutabschnitte 7b in einer Breite von ca. 1 mm ausgeführt und besitzen eine Tiefe, die geringer ist als die sonstige Dessintiefe, die im allgemeinen 8 mm beträgt. Ihre Tiefe beträgt dabei bevorzugt zwischen 20 und 60 % der Dessintiefe. Das Verhältnis der Länge des Nutabschnittes 7b zur Länge des Nutabschnittes 7a wird zwischen 1 : 4 bis 1 : 1 gewählt. Durch die Nutabschnitte 7b sind die Einzelblöcke 3a innerhalb jeder Mittelblockreihe 3 aneinander gekoppelt, was sich günstig auf die Stabilität des Laufstreifenprofiles in diesem Bereich auswirkt und für das Fahrverhalten von Vorteil ist.

Die die beiden Mittelblockreihen 2, 3 voneinander trennenden Nuten 6 bestehen aus zwei Nutabschnitten 6a und 6b. Die Nutabschnitte 6a, 6b verlaufen entweder, wie dargestellt, in Reifenumfangsrichtung bzw. können von der Reifenumfangsrichtung auch geringfügig abweichen und sind, bedingt durch eine entsprechende Kantenausbildung der diese Nutabschnitte begrenzenden Blöcke 2a, 3a in Reifenquerrichtung gegeneinander versetzt, so daß zwischen den beiden Nutabschnitte 6a und 6b ein kurzer Verbindungsabschnitt 6c gebildet wird. Die Anordnung bezüglich der Abrollrichtung des Reifens ist dabei vorzugsweise so gewählt, daß die schmäler ausgeführten Nutabschnitte 6b beim Abrollen des Reifens zuerst in Kontakt mit dem Untergrund eintreten. Die schmalen Nutabschnitte 6b besitzen dabei eine Breite von ca. 1 bis 2 mm, insbesondere von 1,5 mm, die breiten Nutabschnitte 6a besitzen eine Breite von 3 bis 5 mm, insbesondere von 4 mm. Um die Profilstabilität zu erhöhen, ist es ferner von Vorteil, wenn die schmalen Nutabschnitte 6b eine Tiefe aufweisen, die geringer ist als die Tiefe der Nutabschnitte 6a. Wie die Einschnitte 7b besitzen die Nutabschnitte 6b eine Tiefe von 20 bis 60 % der sonstigen Dessintiefe. Das Verhältnis der Längen der beiden Nutabschnitte 6a und 6b entspricht jenem der Nutabschnitte 7a und 7b. Es wird somit eine gewisse Ankopplung der in Profilquerrichtung einander benachbarten Blöcke 2a, 3a der Mittelblockreihen 2, 3 erzielt.

Sämtliche Blöcke sind mit einer Vielzahl von Feineinschnitten versehen. Dabei sind sämtliche dargestellten Feineinschnitte zick-zack-förmig gestaltet, so daß sich die nachfolgende Beschreibung ihres Verlaufes auf ihre Mittellängsachsen bezieht. Anstelle der dargestellten Zick-zack-Form kann auch eine andere Form, beispielsweise eine Wellenform oder auch ein zumindest teilweise gerader Verlauf der Feineinschnitte gewählt werden kann. Sämtliche Feineinschnitte besitzen eine Breite von 0,3 bis 0,8 mm, insbesondere von 0,4 mm, und können mit sich ändernder Tiefe gestaltet werden.

Die Feineinschnitte 9 in den Blöcken 1a der Schulterblockreihen 1 verlaufen zumindest im wesentlichen parallel zu den die Quernuten 8 begrenzenden Blockkanten und sind wie diese unter einem Winkel von ca. 80° gegenüber der exakten Umfangsrichtung des Reifens geneigt. Die Feineinschnitte 10, 11 in den Blöcken 2a, 3a der Mittelblockreihen 2, 3 verlaufen zumindest im wesentlichen in Profilquerrichtung bzw. schließen mit der Reifenumfangsrichtung einen Winkel ein, der zwischen 80 und 90° beträgt und somit nur geringfügig von der Profilquerrichtung abweicht. Die Ausgestaltung ist jedenfalls so getroffen, daß die Feineinschnitte 10, 11 mit der Reifenumfangsrichtung einen um 5 bis 15°, insbesondere bis zu 10°, größeren Winkel einschließen, als die Feineinschnitte 9 in den Blöcken 1a der Schulterblockreihen 1. Durch diese Maßnahme läßt sich ein guter Kompromiß zwischen den für einen Winterreifen erforderlichen Traktionsverhalten auf schneeigem oder schneematschigem Untergrund und einer guten Seitenführung, ebenfalls unter winterlichen Fahrverhältnissen, erzielen.

Die breiten Umfangnsuten 5 setzen sich, bedingt durch die Blockkantenausrichtung der sie begrenzenden Blöcke 1a, 2a, aus Nutabschnitten zusammen, die unter einem kleinen Winkel von ca. 3 bis 6° gegenüber der Umfangsmittellinie verlaufen. Zusätzlich wird durch das Vorsehen von Vorsprüngen an den diese Umfangsnuten 5 begrenzenden Blöcke 1a, 2a eine weitere Strukturierung erzielt, die, wie schon die erstgenannte Maßnahme, einen günstigen Einfluß auf das Traktionsverhalten auf schneeigem Untergrund zeigt.

Die Erfindung ist auf das dargestellte Ausführungsbeispiel nicht eingeschränkt. So ist es insbesondere möglich, die Nuten 6 derart anzuordnen, daß die breiten Nutabschnitte beim Abrollen des Reifens zuerst in die Kontaktfläche mit dem Untergrund eintreten. Die beiden Nutabschnitte können ferner auch ohne seitlichen Versatz ausgebildet werden.

## Patentansprüche

1. Fahrzeugreifen, insbesondere für den Einsatz unter winterlichen Fahrbedingungen, mit einem Laufstreifenprofil, welches durch in Umfangsrichtung verlaufende Nuten und durch Quernuten eine Gliederung in je eine Schulterblockreihe und je ein Paar von Mittelblockreihen aufweist, wobei die Blöcke dieser Blockreihen jeweils mit einer Vielzahl von untereinander parallel verlaufenden Lamellenfeineinschnitten versehen sind, dadurch gekennzeichnet, daß sowohl die Blöcke (3a) der näher zur Profilmitte liegenden Mittelblockreihe (3) als auch die in Querrichtung jeweils benachbarten Blöcke (2a, 3a) der beiden Blockreihen (2, 3) jeweils durch eine Kombination aus einem breiten und einem schmalen Nutabschnitt (6a, 6b, 7a, 7b) voneinander getrennt sind, wobei die schmalen Nutabschnitte (6b, 7b) eine geringere Tiefe besitzen als die breiten Nutabschnitte (6a, 7a).

2. Fahrzeugreifen nach Anspruch 1, dadurch gekennzeichnet, daß die schmalen Nutabschnitte (6b, 7b) eine Breite von 1 bis 2 mm besitzen und eine Tiefe aufweisen, die zwischen 20 und 60 % der Dessintiefe, insbesondere ca. 30 % der Dessintiefe, beträgt.

3. Fahrzeugreifen nach Anspruch 1 oder Anspruch 2, dadurch gekennzeichnet, daß die schmalen Nutabschnitte (6b), die die Blöcke (2a, 3a) der beiden Mittelblockreihen (2, 3) voneinander trennen, gegenüber den breiten Nutabschnitten (6a) in Querrichtung versetzt sind.

4. Fahrzeugreifen nach einem der Ansprüche 1 bis 3, dadurch gekennzeichnet, daß das Verhältnis der Länge des schmalen Nutabschnittes (6b, 7b) zur Länge des zugehörigen breiten Nutabschnittes (6a, 7a) zwischen 1 : 4 bis 1 : 1 beträgt.

5. Fahrzeugreifen nach einem der Ansprüche 1 bis 4, dadurch gekennzeichnet, daß in den Blöcken der Schulterblockreihen (1) Feineinschnitte (9) angeordnet sind, die gegenüber der Reifenumfangsrichtung unter einem Winkel von 70 bis 85° geneigt sind und in den Blöcken der Mittelblockreihen (2, 3) Feineinschnitte (10, 11) angeordnet sind, die unter einem Winkel von 80 bis 90° gegenüber der Reifenumfangsrichtung verlaufen, wobei die Winkeldifferenz zwischen 5 und 15°, insbesondere bis zu 10°, beträgt.

6. Fahrzeugreifen nach einem der Ansprüche 1 bis 5, welcher durch einen gepfeilten Verlauf der Quernuten ein drehrichtungsgebundenes Laufstreifenprofil besitzt, dadurch gekennzeichnet, daß die zwischen den Blöcken (2a, 3a) verlaufenden schmalen Nutabschnitte (6b) beim Abrollen des Reifens zuerst in die Kontaktfläche mit dem Untergrund eintreten.

## Claims

1. Vehicle tyre, more especially for use in wintry driving conditions, having a tread strip profile which is divided into a row of shoulder blocks and into a pair of rows of central blocks by means of grooves extending in the circumferential direction and by means of transverse grooves, the blocks of these rows of blocks each being provided with a plurality of fine laminar incisions extending parallel to one another, characterised in that both the blocks (3a) of the row of central blocks (3) lying closer to the profile centre and the respective adjacent blocks (2a, 3a) of the two rows of blocks (2, 3), when viewed with respect to the transverse direction, are each separated from one another by a combination of a wide and a narrow groove portion (6a, 6b, 7a, 7b), the narrow groove portions (6b, 7b) having a smaller depth than the wide groove portions (6a, 7a).

2. Vehicle tyre according to claim 1, characterised in that the narrow groove portions (6b, 7b) have a width of between 1 and 2 mm and a depth which is between 20 and 60 % of the pattern depth, more especially approx. 30 % of the pattern depth.

3. Vehicle tyre according to claim 1 or claim 2, characterised in that the narrow groove portions (6b), which separate the blocks (2a, 3a) of the two rows of central blocks (2, 3) from one another, are offset from the wide groove portions (6a) when viewed with respect to the transverse direction.

4. Vehicle tyre according to one of claims 1 to 3, characterised in that the ratio of the length of the narrow groove portion (6b, 7b) to the length of the associated wide groove portion (6a, 7a) is between 1:4 and 1:1.

5. Vehicle tyre according to one of claims 1 to 4, characterised in that fine incisions (9) are disposed in the blocks of the rows of shoulder blocks (1) and are inclined at an angle of between 70 and 85° relative to the circumferential direction of the tyre, and fine incisions (10, 11) are disposed in the blocks of the rows of central blocks (2, 3) and extend at an angle of between 80 and 90° relative to the circumferential direction of the tyre, the angular difference amounting to between 5 and 15°, more especially up to 10°.

6. Vehicle tyre according to one of claims 1 to 5, which has a tread strip profile adapted to the direction of rotation as a result of the transverse grooves having an arrow-shaped configuration, characterised in that the narrow groove portions (6b) extending between the blocks (2a, 3a) form the first face in contact with the underlying ground when the tyre is rolling.

## Revendications

1. Bandage pneumatique pour véhicule, notamment destiné à l'utilisation dans des conditions de déplacement hivernales, muni d'un profil de bande de roulement qui, grâce à des rainures s'étendant dans le sens périphérique et à des rainures transversales, présente une subdivision en une rangée respective de blocs d'épaulement et en une paire respective de rangées de blocs centraux, les blocs de ces rangées de blocs étant respectivement pourvus d'un grand nombre de fines entailles de lamellisation s'étendant parallèlement les unes aux autres, caractérisé par le fait qu'aussi bien les blocs (3a) de la rangée (3) de blocs centraux plus rapprochée du centre du profil, que les blocs (2a, 3a) des deux rangées (2, 3) de blocs qui sont respectivement voisins dans le sens transversal, sont séparés les uns des autres, à chaque fois, par une combinaison de segments de rainures (6a, 6b, 7a, 7b) large et étroit, les segments de rainures étroits (6b, 7b) possédant une profondeur moindre que celle des segments de rainures larges (6a, 7a).

2. Bandage pneumatique pour véhicule, selon la revendication 1, caractérisé par le fait que les segments de rainures étroits (6b, 7b) possèdent une largeur de 1 à 2 mm et présentent une profondeur comprise entre 20 et 60 % de la profondeur du dessin et mesurant, en particulier, environ 30 % de la profondeur du dessin.

3. Bandage pneumatique pour véhicule, selon la revendication 1 ou la revendication 2, caractérisé par le fait que les segments de rainures étroits (6b), qui séparent les uns des autres les blocs (2a, 3a) des deux rangées (2, 3) de blocs centraux, sont décalés dans le sens transversal par rapport aux segments de rainures larges (6a).

4. Bandage pneumatique pour véhicule, selon l'une des revendications 1 à 3, caractérisé par le fait que le rapport, entre la longueur du segment de rainure étroit (6b, 7b) et la longueur du segment de rainure large associé (6a, 7a), est compris entre 1:4 et 1:1.

5. Bandage pneumatique pour véhicule, selon l'une des revendications 1 à 4, caractérisé par le fait que de minces entailles (9), pratiquées dans les blocs des rangées (1) de blocs d'épaulement, sont inclinées d'un angle de 70 à 85° vis-à-vis du sens périphérique du bandage pneumatique, et de minces entailles (10, 11), pratiquées dans les blocs des rangées (2, 3) de blocs centraux, s'étendent selon un angle de 80 à 90° vis-à-vis dudit sens périphérique du bandage pneumatique, la différence angulaire étant comprise entre 5 et 15° et atteignant, en particulier, jusqu'à 10°.

6. Bandage pneumatique pour véhicule, selon l'une des revendications 1 à 5, possédant un profit de bande de roulement tributaire de la direction de rotation suite à une allure fléchée des rainures transversales, caractérisé par le fait que, lors du roulement dudit bandage pneumatique, les segments de rainures étroits (6b), s'étendant entre les blocs (2a, 3a), se présentent en premier dans la surface en contact avec le sol.
